# EUROPEAN PATENT APPLICATION

(11) **EP 2 381 709 A1**
(43) Date of publication of application: **26.10.2011**
(21) Application number: 10729114.8
(22) Date of filing: 12.01.2010
(51) Int. Cl.: H04W 8/08

(54) **METHOD, NETWORK DEVICE AND WIRELESS SYSTEM OF DOWNLINK TRANSMISSION IN COORDINATED MULTI-POINT TRANSMISSION SYSTEM**

(30) Priority: 12.01.2009 CN 200910001790
(71) Applicant: Huawei Technologies Co., Ltd., Shenzhen, Guangdong 518129 (CN)
(72) Inventor: WAN, Lei, Guangdong 518129 (CN); ZHAO, Yajun, Guangdong 518129 (CN); CHENG, Xingqing, Guangdong 518129 (CN); REN, Xiaotao, Guangdong 518129 (CN)
(74) Representative: Pfenning, Meinig & Partner GbR
(86) International application number: PCT/CN2010/070134
(87) International publication number: WO 2010/078855

(57) **Abstract**

A downlink transmission method in a Coordinated Multi-Point (CoMP) transmission system, a network device, and a wireless system are disclosed. The method includes: determining a downlink physical resource and a downlink mapping rule corresponding to a physical downlink channel and/or a reference signal negotiated by cooperating cells; and mapping the physical downlink channel and/or the reference signal to the downlink physical resource according to the downlink mapping rule, and sending the physical downlink channel and/or the reference signal to a User Equipment (UE). According to the method, effective coverage can be improved and the problem of mutual interference between cells can be prevented.

## Description

This application claims priority to Chinese Patent Application No. CN200910001790.4, filed with the Chinese Patent Office on January 12, 2009 and entitled "DOWNLINK TRANSMISSION METHOD IN A COORDINATED MULTI-POINT TRANSMISSION SYSTEM, NETWORK DEVICE, AND WIRELESS SYSTEM", which is hereby incorporated by reference in its entirety.

### FIELD OF THE INVENTION

The present invention relates to wireless communication technologies, and in particular, to a downlink transmission method in a Coordinated Multi-Point (CoMP) transmission system, a network device, and a wireless system.

### BACKGROUND OF THE INVENTION

Downlink CoMP transmission in a CoMP transmission technology is applicable in a wireless communication system to improve downlink transmission performance of a user at an edge of a cell. Specifically, multiple cells work jointly to transmit a data channel to the same User Equipment (UE) so as to improve the signal to interference-and-noise ratio of the signal received by the UE or boost the throughput of the system transmission. Multiple cells that transmit the data channel to the same UE by using the CoMP transmission technology are called cooperating cells. The cooperating cells are categorized into an anchor cell and a serving cell, and the UE is a CoMP UE.

In the process of implementing the present invention, the inventors find at least the following problems in the prior art: if a control channel is sent by only one cell, the coverage does not match a data channel well, so that the effective coverage of the cooperatingcooperating cells are affected; moreover, if each cell sends control information separately, channels sent to the same user interfere with each other, so that the receiving performance is reduced and the optimal expected effects cannot be achieved.

### SUMMARY OF THE INVENTION

The embodiments of the present invention provide a downlink transmission method in a CoMP transmission system, a network device, and a wireless system, so as to improve effective coverage of cooperating cells and prevent mutual interference caused when each cooperating cell sends a physical downlink channel separately.

An embodiment of the present invention provides a downlink transmission method in a CoMP transmission system , where the downlink transmission method includes:
determining, by a network device, a downlink physical resource and a downlink mapping rule corresponding to a physical downlink channel and/or a reference signal negotiated by cooperating cells; and
mapping, by the network device, the physical downlink channel and/or the reference signal to the downlink physical resource according to the downlink mapping rule in order to send the physical downlink channel and/or the reference signal to a User Equipment (UE).

An embodiment of the present invention provides a network device, where the network device includes:
an determining module, configured to determine a downlink physical resource and a downlink mapping rule corresponding to a physical downlink channel and/or a reference signal negotiated by cooperating cells; and
a sending module, connected with the obtaining module, and configured to map the physical downlink channel and/or the reference signal to the downlink physical resource according to the downlink mapping rule in order to send the physical downlink channel and/or the reference signal to a User Equipment (UE).

An embodiment of the present invention provides a wireless system, where the wireless system includes:
a network device, configured to determine a downlink physical resource and a downlink mapping rule corresponding to a physical downlink channel and/or a reference signal negotiated by cooperating cells, map the physical downlink channel to the downlink physical resource according to the downlink mapping rule in order to send the physical downlink channel to a UE.

It can be known from the foregoing technical solution that, in the embodiments of the present invention, multiple cooperating cells work together to allocate the downlink physical resource and the downlink mapping rule corresponding to the physical downlink channel. Therefore, through CoMP transmission of multiple cooperating cells, multiple cooperating cells can cooperate to deliver the physical downlink channel to improve effective coverage of the cooperating cells. Meanwhile, through negotiation between the cooperating cells, the problem of mutual interference caused when each cooperating cell sends the physical downlink channel separately is prevented.

### BRIEF DESCRIPTION OF THE DRAWINGS

FIG. 1 is a schematic structural diagram of a network according to a first embodiment of the present invention;
FIG. 2 is a schematic diagram of coordination according to a second embodiment of the present invention;
FIG. 3 is a schematic flowchart of a method according to a third embodiment of the present invention;
FIG. 4 is a schematic flowchart of a method according to a fourth embodiment of the present invention;
FIG. 5 is a schematic flowchart of a method according to a fifth embodiment of the present invention;
FIG. 6 is a schematic flowchart of a method according to a sixth embodiment of the present invention;
FIG. 7 is a schematic flowchart of a method according to a seventh embodiment of the present invention;
FIG. 8 is a schematic flowchart of a method according to an eighth embodiment of the present invention; and
FIG. 9 is a schematic structural diagram of a network device according to a ninth embodiment of the present invention.

### DETAILED DESCRIPTION OF THE EMBODIMENTS

The technical solution of the present invention is described below with reference to accompanying drawings and embodiments.

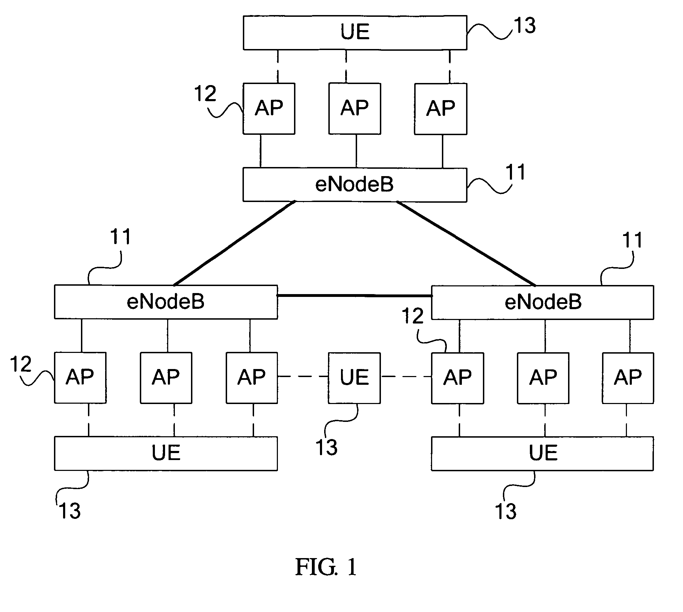

In a single-point transmission system, a UE corresponds to a cell that serves the UE. To improve the system performance, a wireless system may evolve from single-point transmission to multi-point transmission, namely, multiple cooperating cellcoordinated points serve one UE simultaneously. FIG. 1 is a schematic structural diagram of a network according to a first embodiment of the present invention. In a CoMP system, network devices include base staions (eNodeBs) 11 and Access Points (APs) 12. The AP is a node that includes at least a Radio Frequency (RF) transceiver. One or more antennae may be configured on the AP Multiple APs 12 are scattered geographically and connected to the eNodeB 11. In the CoMP system, multiple APs may cooperate to transmit or receive data from a UE 13. The cooperative APs may come from the same eNodeB or different eNodeBs, or from different cells, and the implementation of the embodiments of the present invention is not affected. One cell may include one or more APs. In the following description, it is assumed that a cell includes one AP. When a cell includes multiple APs, the following embodiments are also applicable as if one AP is a cell.

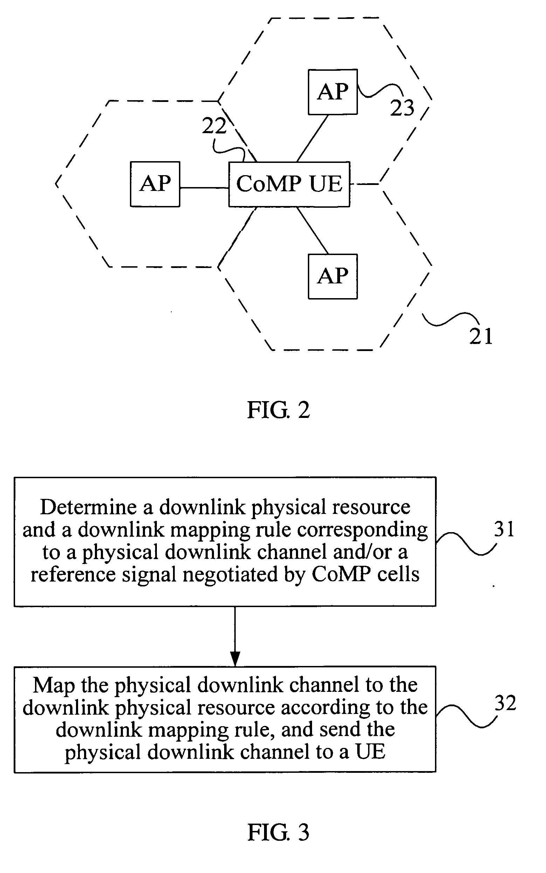

To improve the downlink transmission performance of a user at an edge of a cell, multiple cells may work jointly send a signal to a served UE so as to improve the signal to interference-and-noise ratio of the signal received by the UE or enhance throughput of the system transmission. FIG. 2 is a schematic diagram of coordination according to a second embodiment of the present invention. Cells that jointly serve the UE are known as cooperating cell 21, and the UE jointly served by the cooperating cell is known as a CoMP UE 22. In FIG. 2, it is assumed that one cooperating cell includes an AP 23. As shown in FIG 2, three cooperating cells 21 jointly serve the CoMP UE 22. In this case, three APs 23 send downlink information to the CoMP UE 22 together.

In the downlink CoMP transmission, the UE receives information from multiple cooperating cells. To enable the UE to recover the information sent by multiple cells more accurately, signals of multiple cells generally need to be sent by using the same resource. In this way, the UE can use a simple receiving and combination algorithm, and the cooperating cells can improve spectrum efficiency by using technologies such as joint beam forming. In an existing Long Term Evolution (LTE) system, physical resources mainly include a time-domain resource (an Orthogonal Frequency Division Multiplex (OFDM) symbol) and a frequency-domain resource (a subcarrier). Specifically, the physical resources mainly include: available resources such as a carrier, a subcarrier, a physical resource block, a subframe, a timeslot, an OFDM symbol, a sequence, a sequence offset, a sequence comb, a frequency hopping pattern, a period, and a scrambling code; the available resources are replaced with the physical resources in the following for convenience. In the downlink CoMP transmission, the cells that participate in the transmission include an anchor cell and a serving cell. The anchor cell is a cell used to send system information and control information to the UE. To ensure effective communication, the cooperating cells need to coordinate physical resources and sending modes used by each downlink channel. A physical downlink channel and a reference signal include: one or more of a Physical Downlink Control Channel (PDCCH), a Common Reference Signal (CRS), a Dedicated Reference Signal (DRS), a Physical Control Format Indication Channel (PCFICH), a Physical Multicast Channel (PMCH), a Physical Broadcast Channel (PBCH), a Synchronization Channel (SCH), and a Physical Downlink Shared Channel (PDSCH).

A possible reason for interference between cells in the CoMP technology is as follows: One of the main purposes of the CoMP technology is to jointly serve a UE through multiple cells in order to improve performance of the UE. Generally, the resources used by each channel of each cell correspond to each cell or are UE-specific, or, in other words, allocated to each cell independently. For lack of coordination, the interference between the cells is great, and communication performance is affected.

FIG. 3 is a schematic flowchart of a method according to a third embodiment of the present invention. The method includes the following steps.

Step 31: A network device (such as eNodeB) in a cooperating cell determines a downlink physical resource and a downlink mapping rule corresponding to a physical downlink channel and/or a reference signal negotiated by cooperating cells.

Step 32: The network device in the cooperating cell maps the physical downlink channel and/or the reference signal to the downlink physical resource according to the downlink mapping rule, and send the physical downlink channel and/or the reference signal to a UE.

Before step 31, the method may further include: The cooperating cells negotiate the downlink physical resource and the downlink mapping rule. Specifically, the cooperating cells may negotiate to configure and allocate all or part of the corresponding resources as the downlink physical resource.

After step 32, the method may further include: The network device notifies the downlink mapping rule and/or the used downlink physical resource to the UE. In this way, the UE can receive the physical downlink channel and/or the reference signal at a correct location.

Alternatively, the network device may further negotiate to determine a sending mode corresponding to the physical downlink channel and/or the reference signal, so as to unify sending modes of the cooperating cells and further reduce interference between cells.

The physical downlink channel includes one or more of a PDCCH, a CRS, a DRS, a PCIFCH, a PMCH, a PBCH, an SCH, and a PDSCH.

The downlink physical resource includes one or more of a carrier, a subcarrier, a physical resource block, a sub frame, a timeslot, a sequence, a sequence offset, a sequence comb, a frequency hopping pattern, a period, and a scrambling code. The sub frame includes a sub frame corresponding to a non-ordinary service identifiable to an LTE UE and continuous scheduled sub frames. The sub frame corresponding to the non-ordinary service identifiable to the LTE UE includes an MBSFN sub frame, and the continuous scheduled sub frames include a Voice over Internet Protocol (VoIP) sub frame. The carrier includes a specified carrier in carrier aggregation.

The downlink physical resource and the downlink mapping rule correspond to one or more of the following identifiers (IDs): a CoMP-ID, a UE-ID, an anchor cell-ID, and a serving cell-ID. When the downlink physical resource and the downlink mapping rule correspond to only one ID, the ID may be: the CoMP-ID, the UE-ID, the anchor cell-ID, or the serving cell-ID. According to the CoMP-ID, the UE-ID, the anchor cell-ID, or the serving cell-ID, the cooperating cell obtains the downlink physical resource and downlink mapping rule corresponding to the downlink channel negotiated by the cooperating cells. When the downlink physical resource and the downlink mapping rule correspond to multiple IDs, a leading ID is firstly determined among the multiple IDs. The cooperating cells determine the corresponding downlink physical resource and downlink mapping rule according to the leading ID. Specifically, different IDs may be used as the leading ID according to different application scenarios. After a corresponding ID is selected as the leading ID, configuration and execution are performed according to a rule corresponding to the leading ID, and rules corresponding to multiple IDs are executed simultaneously, but the rules corresponding to multiple IDs need to comply with the rule corresponding to the leading ID. For the multiple IDs above, different IDs may be configured as the leading ID as required. Specifically, which ID is selected as the leading ID is determined by the anchor cell or by negotiation between the cooperating cells, or by a preset cell or by the UE.

The sending modes include: The physical downlink channel sent to the same UE is sent by a cooperating cell, or sent by multiple cooperating cells jointly; and a diversity mode and a multiplexing mode used when the physical downlink channel sent to the same UE is sent by multiple cooperating cellls jointly, for example, indicating Spatial Frequency Block Coding (SFBC) or Cyclic Delay Diversity (CDD).

The mapping the physical downlink channel and/or the reference signal to the downlink physical resource includes: joint mapping and independent mapping. The joint mapping means that joint mapping is performed on all cooperating cells, namely, physical downlink channels corresponding to all CoMP UEs of all cooperating cells are mapped to the downlink physical resource jointly. The independent mapping means that mapping is performed on each cooperating cell separately. The independent mapping comes in the following types: mapping the UEs (CoMP UE and non-CoMP UE) of the cell jointly, or mapping the CoMP UE and the non-CoMP UE separately. That is, in the case of performing the mapping on each cooperating cell separately, the physical downlink channels corresponding to all UEs of a single cooperating cell may be mapped to the downlink physical resource jointly; or the CoMP UE and non-CoMP UE of a single cooperating cell are mapped to different downlink physical resources separately, where the different downlink physical resources include different symbols and/or different resource blocks and/or different carriers. The different symbols may be scheduled to the LTE UE (non-CoMP UE) first, and then scheduled to LTE+ UE (CoMP UE).

When the physical downlink channel and/or the reference signal is a PDCCH, the physical downlink channel can be sent by the anchor cell, or the cell configured by the system, or the cell selected by the UE, or the cell allocated by the eNodeB dynamically according to the service state and the channel situation, or all cooperating cells. The specific sending modes include the diversity mode, and the diversity mode includes SFBC and CDD.

When the physical downlink channel and/or the reference signal is a Reference Symbol (RS), different cooperating cells send RSs corresponding to different antenna ports belonging to the same cell separately. In the case of single-point transmission, the cell that serves the UE may have multiple antennae. The cell may map the downlink information to different antennas respectively, and then the different antennas send the downlink information to the UE. In the case of CoMP transmission, because multiple coordinated points serve the CoMP UE simultaneously, when the downlink information is sent, the downlink information can be distributed on different cooperating APsl and sent to the CoMP UE. Taking the RS as an example, a cooperating AP may send a part of the RS specific to a CoMP UE, and the remaining cooperating APs send the remaining parts of the RS separately. In practice, each cooperating AP corresponds to a virtual antenna port, and the RS is mapped to the virtual antenna ports separately (like the case of mapping the downlink information to different antenna ports in the single-point transmission). Practical antennas in each cooperating AP then transmit the same mapped information to the RS on the cooperating AP respectively.

Each cooperating cell notifies the number of symbols occupied by the PDCCH sent by this cooperating cell to the UE so that the UE can know the PDCCH accurately.

The number of the occupied symbols is the maximum value of numbers of symbols occupied by PDCCHs sent by the cooperating cells. For example, if the PDCCH sent by the first cell occupies 2 symbols and the PDCCH sent by the second cell occupies 3 symbols, both the first cell and the second cell notify the UE that 3 symbols are occupied.

In this embodiment, the resources of the cooperating cell may be implemented in the following mode.

It is assumed that three CoMP cells: cell 2, cell 3, cell 4, and cell 5; cell 1 and cell 2 form a CoMP cell (CoMP11), and cell 2 and cell 3 form another CoMP cell (CoMP12), where cell 2 belongs to both CoMP11 and CoMP12; cell 4 and cell 5 form a CoMP cell (CoMp13). Neither CoMP11 nor CoMP12 shares any cell with CoMP13. The resources used by CoMP11 and CoMP12 may be the same or different. At the time of using resources, CoMP11 and CoMP12 cooperate to use available resources. If the resources used by CoMP11 are partially the same as the resources used by CoMP12, CoMP11 and CoMP12 need to cooperate to use the common resources; if the resources used by CoMP11 are totally different from the resources used by CoMP12, the physical resources may be allocated separately. The resources of CoMPl3 are not correlated with the resources of Corp 12 or CoMP 11, and are free from constraint of correlation.

In this embodiment, through CoMP transmission of multiple cooperating cells, multiple cooperating cells cooperate to allocate the downlink physical resource and the downlink mapping rule corresponding to the physical downlink channel. In this way, multiple cooperating cells deliver the physical downlink channel to improve effective coverage of the cooperating cells. Meanwhile, through negotiation between the cooperating cells, the problem of mutual interference caused when each cooperating cell sends the physical downlink channel separately is prevented.

The following describes the physical downlink channels.

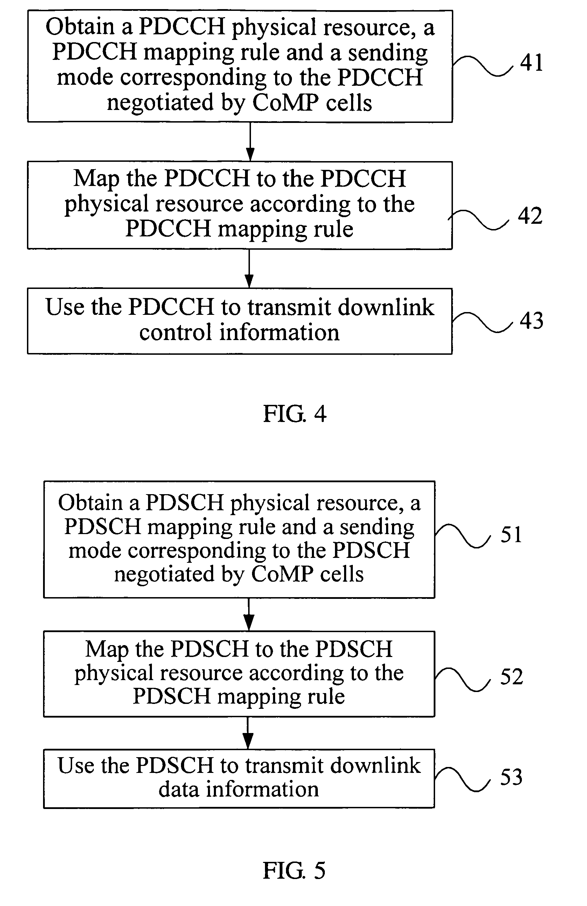

FIG. 4 is a schematic flowchart of a method according to a fourth embodiment of the present invention. In this embodiment, a PDCCH is taken as an example. The method includes the following steps.

Step 41: A network device (such as eNodeB) obtains a PDCCH physical resource, a PDCCH mapping rule and a sending mode corresponding to the PDCCH negotiated by cooperating cells.

Step 42: The network device maps the PDCCH to the PDCCH physical resource according to the PDCCH mapping rule.

Step 43: The network device uses the PDCCH to transmit downlink control information.

In this embodiment, it is assumed that 2 cells are cell 1 and cell 2, and cell 1 and cell 2 form a CoMP cell (CoMP11); there are 4 UEs, which are UE1, UE2, UE3, and UE4 respectively. UE1 and UE2 are CoMP UEs served by CoMP11 jointly; the anchor cell of UE1 is cell 1; the anchor cell of UE 2 is cell 2; UE3 and UE4 are non-CoMP UEs; UE3 belongs to cell 1 and UE4 belongs to cell 2.

The following solutions are applicable:
(1) The PDCCHs of UE1 and UE2 are jointly mapped, the downlink control information is sent by a single cooperating cell (generally, the anchor cell), and no information is sent from the physical resource locations corresponding to other cooperating cells.
(2) The PDCCHs of UE1 and UE2 are jointly mapped, the downlink control information is sent by a single cooperating cell (generally, the anchor cell), and other information may be sent from the physical resource locations corresponding to other cooperating cells.
(3) The PDCCHs of UE1 and UE2 are jointly mapped, and the downlink control information may be sent by all cooperating cells simultaneously.
(4) The PDCCHs of UE1 and UE2 are jointly mapped, the downlink control information is sent by some of the cooperating cells simultaneously, and no information is sent from the physical resource locations corresponding to other cooperating cells.
(5) The PDCCHs of UE1 and UE2 are jointly mapped, the downlink control information is sent by some of the cooperating cells simultaneously, and other information may be sent from the physical resource locations corresponding to other cooperating cells.
(6) In methods (1), (2), (3), (4) and (5) above, the resources used by UE1 and UE2 may be independent of the resources used by UE3 and UE4. For example, the PDCCHs of UE3 and UE4 occupy the first two OFDM symbols of a subframe, and the PDCCHs of UE1 and UE2 occupy the third and the fourth OFDM symbols of the subframe. Alternatively, for example, the PDCCHs of UE3 and UE4 occupy carrier 1, and the PDCCHs of UE and UE2 occupy carrier 2.
(7) The PDCCHs of UE1, UE2, and other non-CoMP UEs belonging to cell 1 (such as UE3) are mapped to the physical resources of cell 1 jointly; the PDCCHs of UE1, UE2, and other non-CoMP UEs belonging to cell 2 (such as UE4) are mapped to the physical resources of cell 2 jointly; and then cell 1 and cell 2 perform sending independently.
(8) The PDCCHs of UE1, UE2, and other non-CoMP UEs belonging to cell 1 (such as UE3) are mapped to the physical resources of cell 1 separately; the PDCCHs of UE1, UE2, and other non-CoMP UEs belonging to cell 2 (such as UE4) are mapped to the physical resources of cell 2 separately.
(9) The PDCCHs of UE1, UE2, and other non-CoMP UEs belonging to cell 1 (such as UE3) are mapped to different physical resources (such as different OFDM symbols, different RBs, and different carriers) of cell 1 separately; the PDCCHs of UE1, UE2, and other non-CoMP UEs belonging to cell 2 (such as UE4) are mapped to different physical resources of cell 2 separately.
(10) The PDCCHs of UE1 and other non-CoMP UEs belonging to cell 1 (such as UE3) are mapped to the physical resources of cell 1 jointly; the PDCCHs of UE2 and other non-CoMP UEs belonging to cell 2 (such as UE4) are mapped to the physical resources of cell 2 jointly; and then cell 1 and cell 2 perform sending independently.
(11) The PDCCHs of UE1 and other non-CoMP UEs belonging to cell 1 (such as UE3) are mapped to different physical resources (such as different OFDM symbols, different RBs, and different carriers) of cell 1 separately; the PDCCHs of UE2 and other non-CoMP UEs belonging to cell 2 (such as UE4) are mapped to different physical resources of cell 2 separately; and cell 1 and cell 2 perform sending independently.

In the foregoing methods, the control information belonging to the same UE may be sent by one cooperating cell or multiple cooperating cells simultaneously.

In this embodiment, the cooperating cells that negotiate the control physical resources may be the anchor cell, the serving cell configured by the system, or the serving cell selected by the UE. Specifically, the cooperating cells may configure the control physical resources statically, or configure the control physical resources dynamically according to service requirements and/or load. In this embodiment, the control physical resources negotiated by the cooperating cells may be all or part of the control physical resources corresponding to the cooperating cells. The sending mode of each cooperating cell may employ various sending diversity modes such as SFBC and CDD.

In this embodiment, the downlink resources include one or more of such types as a carrier, a subcarrier, a physical resource block, a sub frame, a timeslot, an OFDM symbol, a sequence, a sequence offset, a sequence comb, a frequency hopping pattern, a period, and a scrambling code. The resources (such as the sequence and the sequence offset) used by the cooperating cells may be the same or different. The sub frame includes a sub frame corresponding to a non-ordinary service identifiable to an LTE UE and continuous scheduled sub frames. The sub frame corresponding to the non-ordinary service identifiable to the LTE UE includes an MBSFN sub frame, and the continuous scheduled sub frames include a VoIP sub frame. The carrier includes a specified carrier in carrier aggregation.

In this embodiment, the cells that serve the UE jointly may be an anchor cell, or cells configured by the system, or cells selected by the UE, or cells allocated by the eNodeB dynamically according to the service state and the channel situation, or all serving cells.

In this embodiment, different cooperating cells cooperate to allocate, map, and/or scramble the PDCCH resources. The resources in use may be allocated, mapped, and/or scrambled independently; or the resources of different cooperating cells are allocated, mapped, and/or scrambled uniformly by using the same group of PDCCH resources. Such variations do not affect the implementation of the embodiment.

For example, the resources may be negotiated and allocated in the following mode.

It is assumed that two cells are cell 1 and cell 2, and cell 1 and cell 2 form a CoMP cell (CoMP11); physical resources include resource group 1, resource group 2, resource group 3, and resource group 4; there are 4 UEs, which are UE1, UE2, UE3, and UE4 respectively; UE1 and UE2 are CoMP UEs served by CoMP11 jointly; the anchor cell of UE1 is cell 1; the anchor cell of UE 2 is cell 2; UE3 and UE4 are non-CoMP UEs; UE3 belongs to cell 1 and UE4 belongs to cell 2.

The mode of uniform allocation may be:
(1) CoMP11 selects one of the resource groups (such as resource group 1), and the CoMP UE (UE1 and UE2) uses a resource in this resource group. For example, resource group 1 includes resource a and resource b; once cell 1 allocates resource a in resource group 1 to UE1, cell 2 can only allocate resource b rather than resource a to UE2; or
(2) CoMP11 selects several of the resource groups (such as resource group 1 and resource group 2), and the CoMP UE (UE1 and UE2) is allocated with a resource in the two resource groups for use. For example, if resource group 1 includes resource a and resource b, and resource group 2 includes resource c and resource d, cell 1 and cell 2 can allocate resources a, b, c, and d to UE1 and UE2 for use. Once cell 1 allocates resource a in resource group 1 to UE1, cell 2 can only allocate resource b, c, or d rather than resource a to UE2, but cell 2 can select a resource which causes little mutual interference with resource a among resources b, c, and d.

The mode of independent allocation may be:

CoMP11 does not select one or more resource groups exclusively. However, cell 1 and cell 2 coordinate with each other when allocating resources to the CoMP UE. For example, if resource group 1 includes resource a and resource b, and resource group 2 includes resource c and resource d, cell 1 can allocate only resources a and b for use, and cell 2 can allocate only resources c and d for use. Cell 1 allocates resource a in resource group 1 to UE1 for use, and meanwhile cell 1 may notify cell 2 that resource a is used. In this way, cell 2 can select a resource which causes little mutual interference with resource a among resources c and d and allocates the selected resource to UE2. That is, cell 1 and cell 2 can coordinate with each other when allocating resources. The resources allocated to UE3 may be the same as or different from the resources allocated to UE1, and the resources allocated to UE4 may be the same as or different from the resources allocated to UE2.

In this embodiment, through CoMP transmission of multiple cooperating cells, multiple cooperating cells cooperate to allocate the downlink physical resource and the downlink mapping rule corresponding to the PDCCH. In this way, multiple cooperating cells deliver the physical downlink channel to improve effective coverage of the cooperating cells. Meanwhile, through negotiation between the cooperating cells, the problem of mutual interference caused when each cooperating cell sends the physical downlink channel separately is prevented.

FIG. 5 is a schematic flowchart of a method according to a fifth embodiment of the present invention. In this embodiment, a PDSCH is taken as an example. The method includes the following steps.

Step 51: A network device (such as eNodeB) obtains a PDSCH physical resource, a PDSCH mapping rule and a sending mode corresponding to the PDSCH negotiated by cooperating cells.

Step 52: The network device maps the PDSCH to the PDSCH physical resource according to the PDSCH mapping rule.

Step 53: The network device uses the PDSCH to transmit downlink data information.

When the PDSCH information is sent by multiple cooperating cells jointly, the cooperating cells can cooperate to use the same Virtual Resource Block to Physical Resource Block (VRB-to-PRB) mapping rule and/or cooperate to scramble codes.

If the cooperating cells of the PDSCH do not use the same VRB-to-PRB mapping rule and/or do not cooperate to scramble codes, PRBs corresponding to the cooperating cells do not overlap.

The cooperating cells of the PDSCH use the downlink mapping rule which is the same as that of the anchor cell. The serving cell may remove the data sent at the location of sending the reference signal, or power boosting may be performed on the reference signal.

In this embodiment, the downlink mapping rules include one of a VRB-to-PRB mapping rule, cooperating cellremoving, by the serving cell in the cooperating cells, the data sent at the location of sending the reference signal, and performing the power boosting on the reference signal, or any combination thereof.

In this embodiment, through CoMP transmission of multiple cooperating cells, multiple cooperating cells cooperate to allocate the downlink physical resource and the downlink mapping rule corresponding to the PDSCH. In this way, multiple cooperating cells deliver the physical downlink channel to improve effective coverage of the cooperating cells. Meanwhile, through negotiation between the cooperating cells, the problem of mutual interference caused when each cooperating cell sends the physical downlink channel separately is prevented.

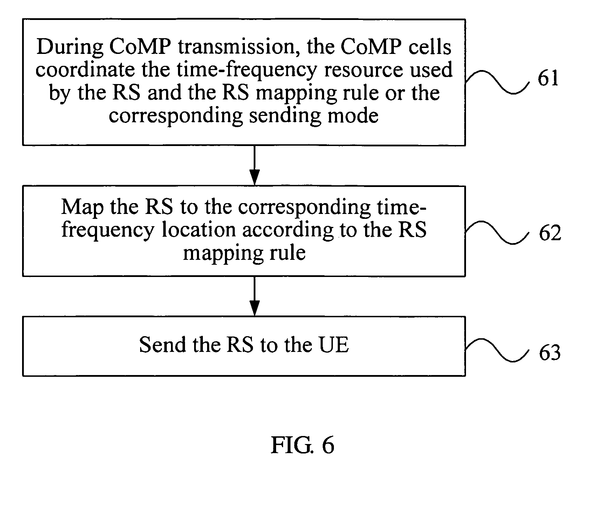

FIG. 6 is a schematic flowchart of a method according to a sixth embodiment of the present invention. In this embodiment, an RS is taken as an example, and the method includes the following steps.

Step 61: When a network device performs CoMP transmission, cooperating cells coordinate the time-frequency resource used by the RS and the RS mapping rule.

Step 62: The network device maps the RS to the corresponding time-frequency location according to the RS mapping rule.

Step 63: The network device sends the RS to the UE.

Different cooperating cells cooperate to allocate and map the RS resources, and the resources used by the RS include frequency, OFDM symbols, and codewords, and may be allocated and mapped independently; or

Different cooperating cells use the RS corresponding to different antenna ports belonging to the same cell respectively. That is, each cooperating cell may be regarded as a virtual antenna port, the virtual antenna port is treated as a physical antenna port, and the RS is mapped according to the mapping rule of the physical antenna port. The density and location of the RS may vary with the actual conditions.

In this embodiment, through CoMP transmission of multiple cooperating cells, multiple cooperating cells cooperate to allocate the downlink physical resource and the downlink mapping rule corresponding to the RS. In this way, multiple cooperating cells deliver the reference signal to improve effective coverage of the cooperating cells. Meanwhile, through negotiation between the cooperating cells, the problem of mutual interference caused when each cooperating cell sends the reference signal separately is prevented.

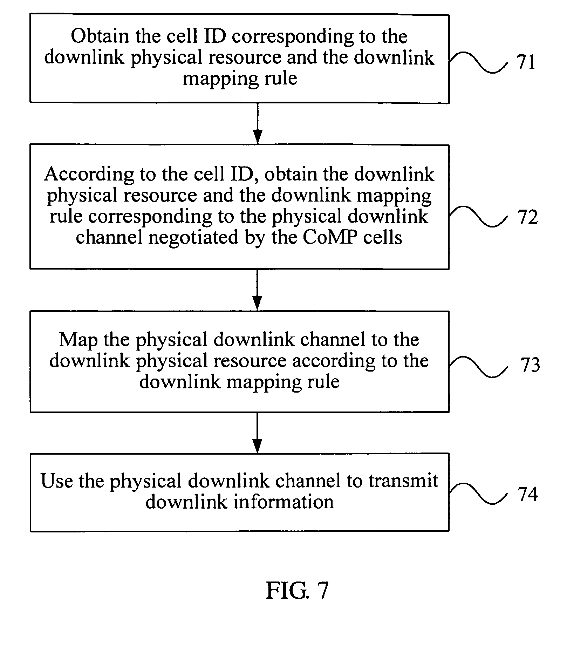

FIG. 7 is a schematic flowchart of a method according to a seventh embodiment of the present invention. In this embodiment, a downlink physical resource and a downlink mapping rule corresponding to a cell ID are taken as an example. The method includes the following steps.

Step 71: A network device obtains the cell ID corresponding to the downlink physical resource and the downlink mapping rule.

Step 72: According to the cell ID, the network device obtains the downlink physical resource and the downlink mapping rule corresponding to a physical downlink channel negotiated by cooperating cells.

Step 73: The network device maps the physical downlink channel to the downlink physical resource according to the downlink mapping rule.

Step 74: The network device uses the physical downlink channel to transmit downlink information.

In this embodiment, the downlink physical resource and the downlink mapping rule corresponding to the physical downlink channel correspond to one or more of the following: a CoMP-ID, a UE-ID, an anchor cell-ID, and a serving cell-ID. The CoMP-ID is different from an ordinary cell ID (such as anchor cell-ID and serving cell-ID), and is ID information specific to CoMP. The CoMP-ID indicates a virtual cell in the CoMP mode, and bears some of the features of an ordinary cell ID. The CoMP-ID may be used to identify features of a cooperating cell specific to CoMP, serve a CoMP UE (namely, a UE in the CoMP state), and can be bound to the CoMP-specific sending mode and/or CoMP-specific resource. Further, the cooperating cell needs to notify the UE in the CoMP state of the CoMP-ID, UE-ID, and anchor cell-ID which are specific to CoMP, and may further notify the cooperating cells which coordinate with each other. The serving cell-ID may also be notified to the cooperating cells.

In this embodiment, among the multiple IDs above, different IDs may be used as a leading ID according to different application scenarios. After a corresponding ID is selected as the leading ID, configuration and execution are performed according to a rule corresponding to the leading ID, and rules corresponding to multiple IDs are executed simultaneously, but the rules corresponding to multiple IDs need to comply with the rule corresponding to the leading ID. For the multiple IDs above, specifically, which ID is selected as the leading ID is determined by the anchor cell or by negotiation between the cooperating cells, or by a preset cell or by the UEcooperating cell. Taking the PRB as an example in the following, the process of allocating the control physical resources is described through two instances. It is assumed that cell 1 and cell 2 form a CoMP cell. UE1-1 and UE1-2 belong to cell 1 (supposing cell-ID1 = 1), and UE2-1 belongs to cell 2 (supposing cell-ID2 = 2). UE1-1 and UE2-1 are UEs in a CoMP state, and are served by cell 1 and cell 2 cooperatively; UE1-2 is a UE in a non-CoMP state and a UE in an ordinary state, and is served by cell 1 only.

### Instance 1

Cell 1 and cell 2 uses the corresponding same PRB as a CoMP-specific PRB. Only the channel that bears the information sent by CoMP UEs (namely, UE1-1 and UE2-1) is entitled to use the CoMP-specific PRB. Cell 1 and cell 2 use the CoMP-specific PRBs of the two parts to form a virtual cell, and allocate a special cell ID (namely, CoMP-ID) to identify the virtual cell. It is assumed that the CoMP-ID is 100.

The CoMP-ID is allocated to cell 1 and cell 2, and UE1-1 and UE2-1 belong to the CoMP virtual cell whose CoMP-ID is 100. The CoMP-ID is notified to UE1-1 and UE2-1. Further, cell-ID1 is notified to UE1-1, and cell-ID2 is notified to UE2-1.

The cooperating cell obtains the PRB and a downlink PRB mapping rule corresponding to the CoMP-ID according to the CoMP-ID, and uses the PRB to send CoMP downlink control information. Meanwhile, UE1-1 may receive other information configured by cell 1, and UE2-1 may receive other information configured by cell 2, for example, downlink broadcast information.

### Instance 2

Cell 1 allocates a PRB to UE1-1 and UE1-2, and cell 2 allocates a PRB to UE2-1. Cell 1 coordinates with cell 2 when cell 1 and cell 2 are allocating the PRBs. Therefore, the PRBs of UE1-1 and UE2-1 can be coordinated for CoMP, and the PRB allocated by cell 1 to UE1-2 does not conflict with the PRB of UE1-1 and UE2-1 which are in the CoMP state. For example, the allocated PDCCHs of UE1-1 and UE2-1 correspond to different PRBs respectively to prevent mutual interference. The PRB allocated to UE1-2 is different from the PRB of UE2-1, but the same PRB may be allocated to UE1-1 and UE2-1.

In this embodiment, the downlink information is sent over the physical downlink channel negotiated by multiple cooperating cells. The cooperating cells that cooperate to allocate the control downlink physical resources may be all or part of the cooperating cells in the virtual cell that performs CoMP.

In this embodiment, through CoMP transmission of multiple cooperating cells, multiple cooperating cells cooperate to allocate the cell ID corresponding to the physical downlink channel, and obtain the corresponding downlink physical resource and downlink mapping rule according to the cell ID. In this way, multiple cooperating cells deliver the physical downlink channel to improve effective coverage of the cooperating cells. Meanwhile, through negotiation between the cooperating cells, the problem of mutual interference caused when each cooperating cell sends the physical downlink channel separately is prevented.

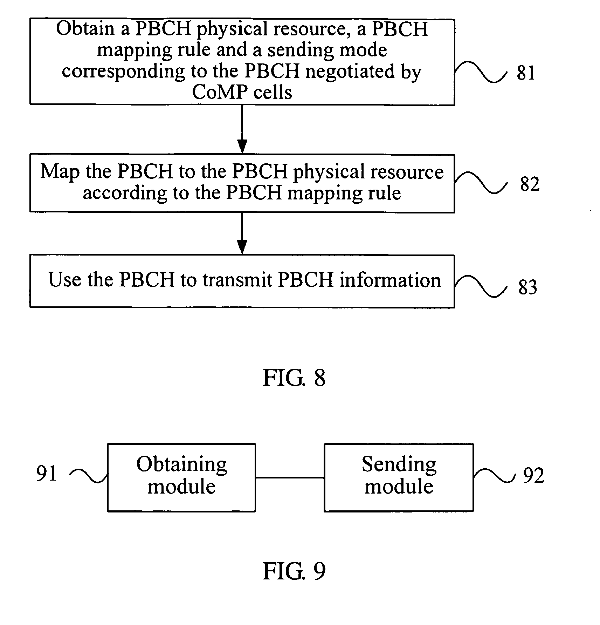

FIG. 8 is a schematic flowchart of a method according to an eighth embodiment of the present invention. In this embodiment, a PBCH is taken as an example. The method includes the following steps.

Step 81: A network device (such as eNodeB) obtains a PBCH physical resource, a PBCH mapping rule and a sending mode corresponding to the PBCH negotiated by cooperating cells.

Step 82: The network device maps the PBCH to the PBCH physical resource according to the PBCH mapping rule.

Step 83: The network device uses the PBCH to transmit PBCH information.

In this embodiment, it is assumed that cell 1 and cell 2 serve UE1 and UE2 jointly, where UE 1 and UE2 are CoMP UEs and belong to both cell 1 and cell 2. The following methods are provided.
(1) The PBCHs of UE1 and other non-CoMP UEs belonging to cell 1 are mapped to the physical resources of cell 1 jointly; the PBCHs of UE1 and other non-CoMP UEs belonging to cell 2 are mapped to the physical resources of cell 2 jointly; and then cell 1 and cell 2 perform sending independently.
(2) The PBCHs of UE and other non-CoMP UEs belonging to cell 1 are mapped to the physical resources of cell 1 separately; the PBCHs of UE1 and other non-CoMP UEs belonging to cell 2 are mapped to the physical resources of cell 2 separately.
(3) The PBCHs of UE1 and other non-CoMP UEs belonging to cell 1 are mapped to different physical resources (such as different OFDM symbols, different RBs, and different carriers) of cell 1 separately; the PBCHs of UE1 and other non-CoMP UEs belonging to cell 2 are mapped to different physical resources of cell 2 separately.
(4) The PBCHs of UE1 and UE2 are mapped jointly, the information is sent by a single cooperating cell or by multiple cooperating cells simultaneously, and no information is sent from the physical resource locations corresponding to other cooperating cells.

In the foregoing methods, the control information belonging to the same UE may be sent by one or more cooperating cells simultaneously.

In this embodiment, the cooperating cells that negotiate the control physical resources may be the anchor cell, the serving cell configured by the system, or the serving cell selected by the UE. Specifically, the cooperating cells may configure the control physical resources statically, or configure the control physical resources dynamically according to service requirements and/or load. In this embodiment, the control physical resources negotiated by the cooperating cells may be all or part of the control physical resources corresponding to the cooperating cell. The sending mode of each cooperating cell may employ various sending diversity modes such as SFBC and CDD.

In this embodiment, the downlink resources include one or more of such types as a carrier, a subcarrier, a physical resource block, a sub frame, a timeslot, an OFDM symbol, a sequence, a sequence offset, a sequence comb, a frequency hopping pattern, a period, and a scrambling code. The resources (such as the sequence and the sequence offset) used by the cooperating cells may be the same or different. The sub frame includes a sub frame corresponding to a non-ordinary service identifiable to an LTE UE and continuous scheduled sub frames. The sub frame corresponding to the non-ordinary service identifiable to the LTE UE includes an MBSFN sub frame, and the continuous scheduled sub frames include a VoIP sub frame. The carrier includes a specified carrier in carrier aggregation.

In this embodiment, the cells that serve the UE jointly may be an anchor cell, or cells configured by the system, or cells selected by the UE, or cells allocated by the eNodeB dynamically according to the service state and the channel situation, or all serving cells.

In this embodiment, different cooperating cells cooperate to allocate, map, and/or scramble the PBCH resources. The resources in use may be allocated, mapped, and/or scrambled independently; or the resources of different cooperating cells are allocated, mapped, and/or scrambled uniformly by using the same group of PBCH resources. Such variations do not affect the implementation of the embodiment.

In this embodiment, through CoMP transmission of multiple cooperating cells, multiple cooperating cells cooperate to allocate the downlink physical resource and the downlink mapping rule corresponding to the PBCH. In this way, multiple cooperating cells deliver the physical downlink channel to improve effective coverage of the cooperating cells. Meanwhile, through negotiation between the cooperating cells, the problem of mutual interference caused when each cooperating cell sends the physical downlink channel separately is prevented.

Persons of ordinary skill in the art should understand that all or a part of the steps of the method according to the embodiments of the present invention may be implemented by a program instructing relevant hardware. The program may be stored in a computer readable storage medium. When the program runs, the program executes the steps of the method specified in any embodiment of the present invention. The storage medium may be any medium that is capable of storing program codes, such as Read-Only Memory (ROM), Random Access Memory (RAM), magnetic disk, or optical disk.

FIG. 9 is a schematic structural diagram of a network device according to an eighth embodiment of the present invention. The network device includes an obtaining module 91 and a sending module 92. The obtaining module 91 is configured to: obtain a downlink physical resource, a downlink mapping rule, and a sending mode corresponding to a physical downlink channel and/or a reference signal negotiated by cooperating cells. The sending module 92 is connected with the obtaining module 91, and is configured to map the physical downlink channel and/or the reference signal to the downlink physical resource according to the downlink mapping rule and send the physical downlink channel and/or the reference signal to a UE.

Parameters involved in the foregoing modules may refer to those in the method embodiments and are not repeated.

In this embodiment, through CoMP transmission of multiple cooperating cells, multiple cooperating cells cooperate to allocate a cell ID corresponding to the physical downlink channel, and obtain the corresponding downlink physical resource and downlink mapping rule according to the cell ID. In this way, multiple cooperating cells deliver the physical downlink channel to improve effective coverage of the cooperating cells. Meanwhile, through negotiation between the cooperating cells, the problem of mutual interference caused when each cooperating cell sends the physical downlink channel separately is prevented.

Further, an embodiment of the present invention provides a wireless system. The wireless system includes a network device. The network device is configured to: obtain a downlink physical resource and a downlink mapping rule corresponding to a physical downlink channel and/or a reference signal negotiated by cooperating cells, and map the physical downlink channel and/or the reference signal to the downlink physical resource according to the downlink mapping rule and send the physical downlink channel and/or the reference signal to a UE. The network device may be the network device described in the fourth embodiment.

In this embodiment, through CoMP transmission of multiple cooperating cells, multiple cooperating cells cooperate to allocate a cell ID corresponding to the physical downlink channel, and obtain the corresponding downlink physical resource and downlink mapping rule according to the cell ID. In this way, multiple cooperating cells deliver the physical downlink channel to improve effective coverage of the cooperating cells. Meanwhile, through negotiation between the cooperating cells, the problem of mutual interference caused when each cooperating cell sends the physical downlink channel separately is prevented.

Finally, it should be noted that the above embodiments are merely provided for describing the technical solutions of the present invention, but not intended to limit the present invention. It is apparent that persons skilled in the art can make various modifications and variations to the invention without departing from the spirit and scope of the invention. The present invention is intended to cover the modifications and variations provided that they fall within the protection scope defined by the following claims or their equivalents.

## Claims

1. A downlink transmission method in a Coordinated Multi-Point (CoMP) transmission system, **characterized by** comprising:
determining a downlink physical resource and a downlink mapping rule corresponding to a physical downlink channel and/or a reference signal negotiated by cooperating cells; and
mapping the physical downlink channel and/or the reference signal to the downlink physical resource according to the downlink mapping rule in order to send the physical downlink channel and/or the reference signal to a User Equipment (UE).

2. The method according to claim 1, wherein:
the physical downlink channel comprise one or more of: a Physical Downlink Control Channel (PDCCH), a Physical Control Format Indication Channel (PCFICH), a Physical Multicast Channel (PMCH), a Physical Broadcast Channel (PBCH), a Synchronization Channel (SCH), and Physical Downlink Shared Channel (PDSCH); and/or
the reference signal comprise: a public reference signal and/or a private reference signal; and/or
the downlink physical resource comprise one or more of: a carrier, a subcarrier, a physical resource block (PRB), a sub frame, a timeslot, a sequence, a sequence offset, a sequence comb, a frequency hopping pattern, a period, and a scrambling code.

3. The method according to claim 1, wherein:
the determining the downlink physical resource and the downlink mapping rule corresponding to the physical downlink channel and/or the reference signal negotiated by the cooperating cells comprises:
obtaining an identifier (ID) corresponding to the downlink physical resource and the downlink mapping rule, wherein the ID comprises one of the following: a CoMP-ID, a UE-ID, an anchor cell-ID, and a serving cell-ID;
according to the ID, determining the downlink physical resource and the downlink mapping rule corresponding to the physical downlink channel and/or the reference signal negotiated by the cooperating cells.
or, the determining the downlink physical resource and the downlink mapping rule corresponding to the physical downlink channel and/or the reference signal negotiated by the cooperating cells comprises:
obtaining multiple IDs corresponding to the downlink physical resource and downlink mapping rule, wherein the IDs comprise one of the following: the CoMP-ID, the UE-ID, the anchor cell-ID, and the serving cell-ID, or any combination thereof; and
determining a leading ID among the multiple IDs, and determining the corresponding downlink physical resource and the downlink mapping rule according to the leading ID.

4. The method according to claim 1, further comprising:
determining a sending mode corresponding to the physical downlink channel and/or the reference signal negotiated by the cooperating cells, wherein the sending mode comprise: the physical downlink channel of a same UE sent by one cooperating celor by multiple cooperating cells jointly; when the sending mode is the physical downlink channel of a same UE sent by multiple cooperating cells jointly the sending mode further comprise a diversity mode and a multiplexing mode which are used during multiple cooperating cells sending the physical downlink channel of a same UE jointly.

5. The method according to claim 1, wherein: the mapping the physical downlink channel and/or the reference signal to the downlink physical resource comprises:
mapping physical downlink channels and/or reference signals corresponding to multiple CoMP UEs of multiple cooperating cells to a downlink physical resource of one of the multiple cooperating cells jointly; or
mapping physical downlink channels and/or a reference signals corresponding to multiple CoMP UEs of multiple cooperating cells to downlink physical resource of at least two of the multiple cooperating cells jointly; or
mapping physical downlink channels and/or reference signals corresponding to multiple CoMP UEs of multiple cooperating cells and physical downlink channels and/or reference signald corresponding to one or more non-CoMP UEs of a first cooperating cell to downlink physical resource of the first cooperating cell jointly, wherein the first cooperating cell is one of the multiple cooperating cells; or
mapping physical downlink channels and/or a reference signals corresponding to CoMP UEs and non-CoMP UEs of a cooperating cell to downlink physical resource of the cooperating cell jointly; or
mapping physical downlink channels corresponding to CoMP UEs of each of multiple cooperating cells to downlink physical resource of the cooperating cell to which the CoMP UE belongs respectively.

6. The method according to claim 1, wherein:
when the physical downlink channel is a Physical Downlink Control Channel (PDCCH), the mapping, by the network device, the physical downlink channel and/or the reference signal to the downlink physical resource according to the downlink mapping rule in order to send the physical downlink channel and/or the reference signal to the UE comprises:
cooperating cell mapping, by an anchor cell, or a cell configured by a system, or a cell selected by the UE, or a cell allocated by an base station dynamically, or all cooperating cells, the PDCCH to the downlink physical resource according to the downlink mapping rule in a diversity mode or a multiplexing mode in order to send the PDCCH to the UE.

7. The method according to claim 1, wherein: the mapping the reference signal to the downlink physical resource according to the downlink mapping rule in order to send the reference signal to the UE comprises:
mapping, by different cooperating cells, reference signals corresponding to different antenna ports belonging to a second cooperating cell to the downlink physical resource separately according to the downlink mapping rule, and sending the reference signals to the UE, wherein the second cooperating cell is any one of the different cooperating cells.

8. The method according to claim 1, wherein:
the cooperating cells negotiate a same downlink mapping rule corresponding to the physical downlink channel and/or the reference signal.

9. The method according to claim 1, wherein:
the downlink mapping rules comprise at least one or any combination of: mapping rule of Virtual Resource Block to Physical Resource Block; or mapping rule of removing data sent at a location of sending the reference signal and performing power boosting on the reference signal by a serving cell in the cooperating cells.

10. The method according to claim 1, wherein:
when the physical downlink channel is a Physical Downlink Control Channel (PDCCH), the method further comprises: notifying the number of symbols occupied by the PDCCH to the UE, wherein the number of symbols occupied by the PDCCH is a maximum value of numbers of symbols occupied by PDCCHs sent by the cooperating cells.

11. A network device, **characterized by** comprising:
an obtaining module, configured to: obtain a downlink physical resource and a downlink mapping rule corresponding to a physical downlink channel and/or a reference signal negotiated by cooperating cells; and
a sending module, connected with the obtaining module, and configured to map the physical downlink channel and/or the reference signal to the downlink physical resource according to the downlink mapping rule in order to send the physical downlink channel and/or the reference signal to a User Equipment (UE).
